# EUROPEAN PATENT APPLICATION

(11) **EP 4 446 799 A1**
(43) Date of publication of application: **16.10.2024**
(21) Application number: 24157858.2
(22) Date of filing: 15.02.2024
(51) Int. Cl.: G02F 1/015, G02F 1/017, G02F 1/025

(54) **EFFICIENT PIN PHASE SHIFTERS**

(30) Priority: 21.02.2023 US 202363447297 P; 26.01.2024 US 202418424171
(71) Applicant: Apple Inc., Cupertino, CA 95014 (US)
(72) Inventor: PELC, Jason S., Sunnyvale (US); LIU, Wei, Mountain View (US)
(74) Representative: COPA Copenhagen Patents

(57) **Abstract**

Embodiments are directed to photonic integrated circuits that include a carrier-based phase shifter. The carrier-based phase shifter is configured as a PIN phase shifter with a waveguide formed from a strip extending from a slab waveguide. The PIN phase shifter includes a first set of doping regions positioned in a slab waveguide and a second set of doping regions positioned the strip. Each of the first set of doping regions has a first conductivity type, and each of the second set of doping regions has a second conductivity type that is different that the first conductivity type.

## Description

### CROSS-REFERENCE TO RELATED APPLICATION

This application is a nonprovisional and claims the benefit under 35 U.S.C. 119(e) of U.S. Provisional Patent Application No. 63/447,297, filed February 21, 2023, the contents of which are incorporated herein by reference as if fully disclosed herein.

### FIELD

This disclosure relates generally to optical phase shifters. More particularly, this disclosure relates to PIN phase shifters with top-doped waveguides.

### BACKGROUND

Controllable optical phase shifters are often used in photonic integrated circuits to selectively modulate the phase of light carried by a waveguide. For example, thermo-optic phase shifters change the refractive index of a portion of a waveguide by changing its temperature, thereby inducing a phase shift in the light carried by the waveguide. Other phase shifters may modulate the phase of light by moving a structure in relation to a waveguide to change the effective refractive index experienced by light carried by the waveguide. Different optical phase shifters typically have tradeoffs between speed (i.e., how quickly the optical phase shifter can achieve a given phase change), size, optical loss, and power consumption. Accordingly, it may be desirable to provide compact and efficient phase shifters.

### SUMMARY

Embodiments described herein are directed to phase shifters and photonic integrated circuits including phase shifters, and methods of operating phase shifters. Some embodiments are directed to a photonic integrated circuit that includes a phase shifter. The photonic integrated circuit includes a substrate, a cladding layer, and a waveguide layer positioned on the cladding layer. The waveguide layer forms a waveguide that includes a strip extending from a slab waveguide. The PIN phase shifter includes a first set of doping regions positioned in a slab waveguide and a second set of doping regions positioned the strip. Each of the first set of doping regions has a first conductivity type, and each of the second set of doping regions has a second conductivity type that is different that the first conductivity type.

In some variations, a photonic integrated circuit includes a substrate, a first cladding layer supported by the substrate, a waveguide layer positioned on the first cladding layer, and a PIN phase shifter. In these instances, the waveguide layer is shaped to define a rib waveguide that includes a strip extending from a slab waveguide. The slab waveguide includes a first set of doping regions positioned on one or both sides of the strip, and the strip includes a second set of doping regions, such that the first set of doping regions has a different conductivity type than the second set of doping regions. The PIN phase shifter comprises a PIN diode formed by the first set of doping regions, the second set of doping regions, and an undoped portion of the rib waveguide. Each of the first set of doping regions may form an n-type region and each of the second set of doping regions may form a p-type region, or vice versa.

In some instances, the second set of doping regions extend at least partially through the strip from a top surface of the strip. Additionally or alternatively, the second set of doping regions includes a doping region that extends across an entire width of the strip. Additionally or alternatively, the first set of doping regions comprises a first doping region positioned on a first side of the rib waveguide and a second doping region positioned on a second side of the rib waveguide.

In some variations, the photonic integrated circuit further includes a first set of conductive traces electrically connecting the first set of doping regions to a control circuit and a second set of conductive traces electrically connecting the second set of doping regions to the control circuit. In some of these variations, the photonic integrated circuit includes a set of conductive vias electrically connecting the second set of doping regions to the second set of conductive traces. In some instances, some or all of the set of conductive vias are positioned off-center with respect to the strip. For example, the set of conductive vias may include a first conductive via and a second conductive via, such that the first and second conductive vias are positioned side-by-side along a width of the strip.

Additionally or alternatively, the photonic integrated circuit may include a barrier layer electrically connecting the set of conductive vias and the second set of doping regions, wherein the barrier layer and conductive vias are formed from different materials. In some of these variations, the barrier layer has a smaller height than each of the set of conductive vias. Additionally or alternatively, the barrier layer is wider than each of the set of conductive vias.

In some instances, the second set of doping regions includes a plurality of doping regions. In some of these variations, the second set of doping regions includes a first doping region and a second doping region positioned side-by-side along a width of the strip. Additionally or alternatively, the strip may include a first strip extending from the slab waveguide and a second strip extending from a top surface of the first strip. In these variations, the second set of doping regions may be positioned in the second strip.

Other variations are directed to a photonic integrated circuit that includes a substrate, a first cladding layer supported by the substrate, a waveguide layer positioned on the first cladding layer, and a PIN phase shifter. In these instances, the waveguide layer is shaped to define a rib waveguide that includes a first strip extending from a slab waveguide, and a second strip extending from the first strip. The slab waveguide includes a first set of doping regions positioned on one or both sides of the strip, and the second strip includes a second set of doping regions, such that the first set of doping regions has a different conductivity type than the second set of doping regions. The PIN phase shifter comprises a PIN diode formed by the first set of doping regions, the second set of doping regions, and an undoped portion of the rib waveguide. Each of the first set of doping regions may form an n-type region and each of the second set of doping regions may form a p-type region, or vice versa.

Still other variations are directed to a photonic integrated circuit that includes a first waveguide and a second waveguide, where the first waveguide includes a first strip that extends from a slab waveguide and the second waveguide includes a second strip that extends from the slab waveguide. The photonic integrated circuit further includes a plurality of doping regions positioned in the slab waveguide having a first conductivity type, wherein a first doping region of the plurality of doping regions is positioned the first strip and the second strip. A first set of doping regions is positioned in the first strip and has a second conductivity type, and a second set of doping regions is positioned in the second strip and has the second conductivity type. The photonic integrated circuit includes a first PIN phase shifter having a first PIN diode formed from an undoped portion of the first waveguide, the first set of doping regions, and the first doping region of the plurality of doping regions, as well as a second PIN phase shifter that has a second PIN diode formed from an undoped portion of the second waveguide, the second set of doping regions, and the first doping region of the plurality of doping regions.

In some of these variations, the plurality of doping regions includes a second doping region, wherein the first waveguide is positioned between the first doping region and the second doping region of the plurality of doping regions. The plurality of doping regions may further include a third doping region, wherein the second waveguide is positioned between the first doping region and the third doping region of the plurality of doping regions. Additionally or alternatively, a set of conductive traces may be electrically connected to the plurality of doping regions, where each of the plurality of doping regions is electrically connected to the set of conductive traces via a corresponding set of conductive vias.

In addition to the example aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1A shows a cross-sectional side view of a variation of a photonic integrated circuit that includes a side-doped PIN phase shifter. FIG. 1B shows a partial top view of the photonic integrated circuit of FIG. 1A, where FIG. 1A is the cross-sectional view taken along line 1A-1A.
FIG. 2 shows a cross-sectional side view of a variation of a photonic integrated circuit that includes a PIN phase shifter with a top-doped waveguide, as described herein.
FIG. 3 shows a cross-sectional side view of a variation of a photonic integrated circuit that includes multiple PIN phase shifters with top-doped waveguides, such as described herein.
FIGS. 4 and 5 show cross-sectional side views of variations of photonic integrated circuits having PIN phase shifters with top-doped waveguides, as described herein.
FIG. 6A shows a cross-sectional side view of a variation of a photonic integrated circuit that includes a PIN phase shifter with a top-doped waveguide. FIG. 6B shows a partial top view of the photonic integrated circuit of FIG. 6A, where FIG. 6A is the cross-sectional view taken along line 6A-6A.
FIG. 7 shows a cross-sectional side view of a variation of a photonic integrated circuit that includes a PIN phase shifter with a top-doped waveguide, as described herein.

It should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

The following disclosure relates to photonic integrated circuits that include a carrier-based phase shifter. Specifically, the carrier-based phase shifter includes a PIN diode electrically connected to a set of conductive traves. The carrier-based phase shifter is configured such that current is delivered through the PIN diode via the set of conductive traces to change a concentration of charge carriers within a waveguide. A first set of doping regions is formed on one or both sides of the waveguide, and a top surface of the waveguide is doped to create a second set of doping regions. The first set of doping regions, the second set of doping regions, and an undoped portion of the waveguide between the first and second sets of doping regions collectively form a PIN diode.

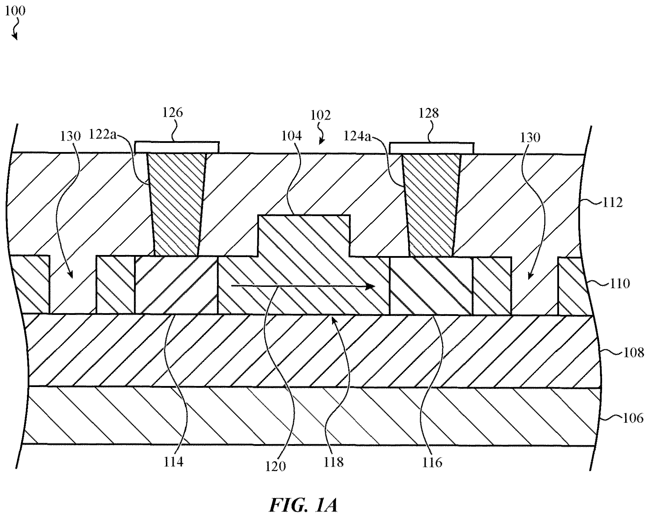

These and other embodiments are discussed below with reference to FIGS. 1A-7. However, those skilled in the art will readily appreciate that the detailed description given herein with respect to these Figures is for explanatory purposes only and should not be construed as limiting.

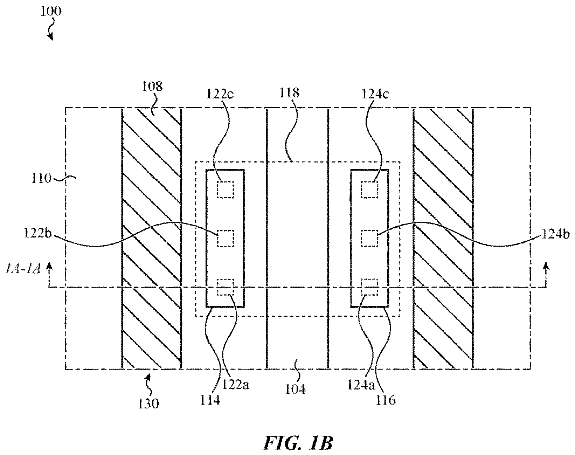

FIGS. 1A and 1B show a cross-sectional side view and a top view, respectively, of a photonic integrated circuit 100 including a PIN phase shifter 102 that is configured to modulate the phase of light traveling through a waveguide 104 according to a side-doped design. Specifically, the photonic integrated circuit 100 includes a substrate 106, a first cladding layer 108 supported by the substrate 106 (either directly or via one or more intervening layers), and a waveguide layer 110 positioned on the first cladding layer 108. In some instances, one or more additional surfaces of the waveguide layer 110 is covered with a second cladding layer 112, which may help provide optical confinement to the waveguide layer 110 as well as to electrically insulate other components of the PIN phase shifter 102. While each of the first cladding layer 108 and second cladding layer 112 is shown in FIG. 1A as a single layer, either of these layers may be formed using multiple sub-layers that are deposited at different times (e.g., with one or more intervening process steps).

The various layers of the photonic integrated circuit may be formed from any suitable materials depending on the wavelength or wavelengths of light that will be carried by the waveguide 104. For example, in some variations, the waveguide layer 110 is formed from a semiconductor such as silicon, silicon nitride, silica, or the like, the first and second cladding layers 108, 112 are formed from a dielectric material (or materials) such as silicon dioxide, and the substrate 106 is formed from silicon.

The waveguide layer 110 defines multiple components of the PIN phase shifter 102. Specifically, the waveguide layer 110 defines the waveguide 104, which in the variation shown in FIG. 1A is configured as a rib waveguide. The waveguide 104 is positioned between a first doping region 114 of the waveguide layer 110 and a second doping region 116 of the waveguide layer 110. In other words, the first doping region 114 is positioned on a first side of the waveguide 104 and the second doping region 116 is positioned on a second side of the waveguide 104 opposite the first side. Accordingly, light traveling through the waveguide 104 will travel between the first and second doping regions, 114, 116.

The first doping region 114 is doped to have a different conductivity type than the second doping region 116, such that one of the regions is an n-type region and the other is a p-type region. Specifically, the first doping region 114 may be doped with first type of material (e.g., a p-type dopant) to form a first type of region (e.g., a p-type region) and the second doping region 116 is doped with a second type of material (e.g., an n-type dopant) to form a second type of region (e.g., an n-type region). Between the first doping region 114 and the second doping region 116, the waveguide 104 may be undoped such that the first doping region 114, waveguide 104, and second doping region 116 collectively form a PIN diode 118.

The PIN diode 118 may be electrical connected to a control circuit (not shown) that configured to drive current 120 through the PIN diode 118. Specifically, current 120 flows through the PIN diode 118 from the first doping region 114 to the second doping region 116 through the undoped waveguide 104, which acts as the intrinsic region of the PIN diode 118. As the current 120 flows through the waveguide 104, charge carriers are injected into the waveguide 104 that change the refractive index of the portion of the waveguide 104 positioned between the first doping region 114 and second doping region 116. This change in refractive index modulates the phase of light traveling through the waveguide 104. Accordingly, the PIN phase shifter 102 may controllably change the phase of light travelling through the waveguide 104 by controlling the amount of current 120 (e.g., via the control circuit) flowing through the PIN diode 118.

In order to provide a current path between the PIN diode 118 and the control circuit, the PIN phase shifter 102 has a pair of conductive traces that includes a first conductive trace 126 and a second conductive trace 128. The first and second conductive traces 126, 128 may be electrically connected to the control circuit to electrically connect the control circuit to the PIN diode 118. The first conductive trace 126 and second conductive trace 128 may be embedded in or positioned on (as shown in FIG. 1A) the second cladding layer 112, or otherwise suspended above the PIN diode 118. The first conductive trace 126 is electrically connected to the first doping region 114 via a first set of conductive vias 122a-122c, and the second conductive trace 128 is electrically connected to the second doping region 116 via a second set of conductive vias 124a-122c. To illustrate this, FIG. 1B shows a top view of the photonic integrated circuit 100 with the second cladding layer 112, the first conductive trace 126, and the second conductive trace 128 removed.

The vias of the first set of vias 122a-122c and the second sets of vias 124a-124c may be formed from any suitable electrically conductive material (e.g., a metal such as tungsten or the like), and may be deposited in openings in the second cladding layer 112 to contact the first doping region 114 and the second doping region 116, respectively. While the first set of vias 122a-122c and the second sets of vias 124a-124c are shown in FIG. 1B as each including three vias, it should be appreciated that each set of vias may include any number of vias (e.g., one, two, three or four or more).

Additionally, the photonic integrated circuit 100 may define a set of trenches 130 that separates the portion of the waveguide layer 110 associated with the PIN phase shifter 102 (i.e., the PIN diode 118) from other sections of the waveguide layer 110. This may provide electrical isolation between the PIN diodes of adjacent PIN phase shifters, such the doping region of one PIN phase shifter does not inadvertently form a PIN diode with a corresponding doping region of an adjacent PIN shifter. Such an PIN diode would direct current away from the waveguide of a PIN phase shifter, thereby resulting in power losses.

In the PIN phase shifter 102 shown in FIGS. 1A and 1B, it is desirable the first and second doping regions 114, 116 to extend fully through the waveguide layer 110 (i.e., for the doping to extend from a top surface of the waveguide layer 110 to the first cladding layer 108). This may help to confine injection of the charge carriers to the waveguide 104 between the first and second doping regions 114, 116. Depending on the thickness of the waveguide layer 110, as well as the selection and amount of doping materials used to form the first and second doping regions, 114, 116, defects may occur during the creation one or both of the doping regions 114, 116. These defects may negatively impact the efficiency of the PIN phase shifter 102. In some instances, creation of one doping region results in more defects than the creation of the other doping region. For example, the region that is p-doped (e.g., the first doping region 114) may have more defects than the region that is n-doped (e.g., the second doping region 116).

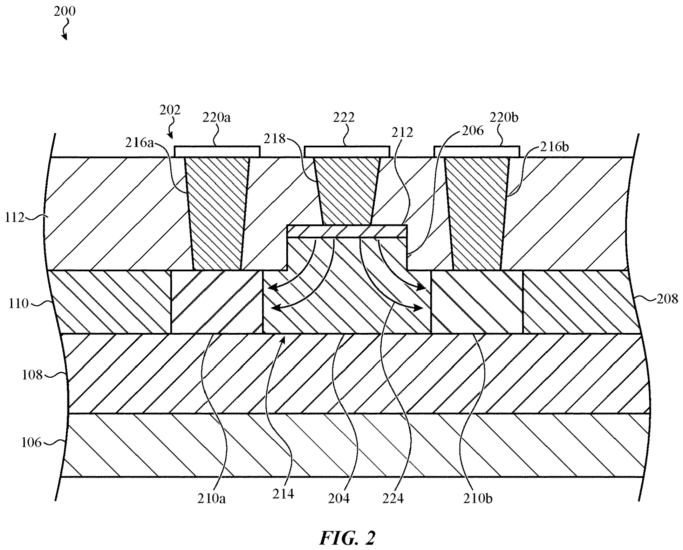

To address the inefficiencies caused by these defects, embodiments of the PIN phase shifters described herein utilize a top-doped waveguide in conjunction with one or more side-doped regions to form a PIN diode. FIG. 2 shows a cross-sectional side view of a photonic integrated circuit 200 that includes a PIN phase shifter 202. The photonic integrated circuit 200 includes a substrate 106, a first cladding layer 108 supported by the substrate 106 (either directly or via one or more intervening layers), a waveguide layer 110 positioned on the first cladding layer 108, and optionally a second cladding layer 112 covering one or more additional surfaces of the waveguide layer 110, such as described above with respect to FIGS. 1A and 1B.

The waveguide layer 110 defines multiple components of the PIN phase shifter 202. Specifically, the waveguide layer 110 is shaped to define a waveguide 204, which in the variation shown in FIG. 2 is configured as a rib waveguide. Specifically, the waveguide layer 110 is shaped (e.g., lithographically defined via etching) to include a strip 206 extending from a slab waveguide 208, which collectively form the waveguide 204. Accordingly, the height of the waveguide layer 110 is larger in the strip 206 than in the surrounding slab waveguide 208. When light travels along a length of the waveguide 204, light will be confined to the strip 206, as well as a portion of the slab waveguide 208 on either side of the strip 206.

The slab waveguide 208 includes a first set of doping regions 210a, 210b positioned on one or both sides of the strip 206, and the strip 206 includes a second set of doping regions 212. The first set of doping regions 201a, 210b has a different conductivity type than the second set of doping regions 212, such that one of the sets includes only n-type regions and the other of the sets includes only p-type regions. For example, each doping region of the first set of doping regions 210a, 210b may be doped with a corresponding n-type dopant to form an n-type region, while each doping region of the second set of doping regions 212 may be doped with a corresponding p-type dopant to form a p-type region (or vice versa).

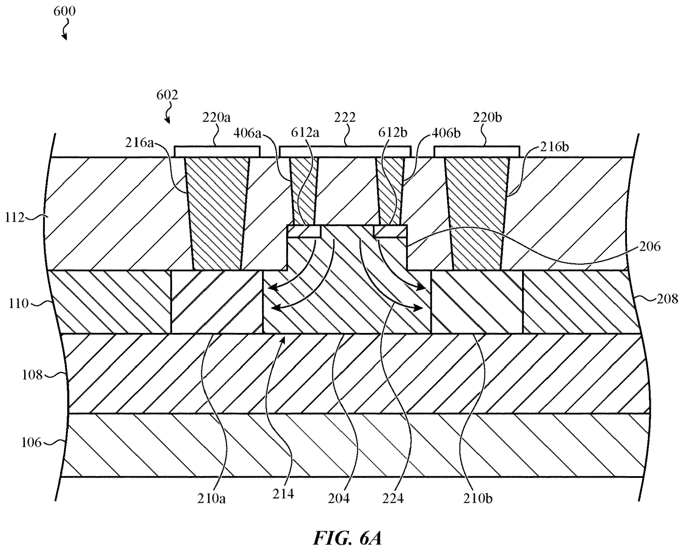

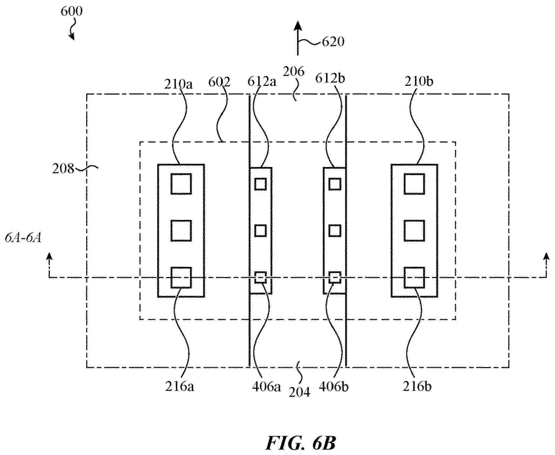

A top surface of the strip 206 may be doped to form the second set of doping regions 212, and thus the second set of doping regions 212 may extend at least partially through the strip 206 from the top surface of the strip 206 toward first cladding layer. In the variation shown in FIG. 2, the second set of doping regions includes a single doping region 212, though it should be appreciated that the second set of doping regions may include multiple doping regions, such as described herein with respect to FIGS. 6A and 6B. Additionally, while the doping region 212 is shown in as extending across the entire width of the strip 206, in other instances the second set of doping regions 212 may include a single doping region 212 that has a width less than the width of the strip 206. In these instances, the strip 206 will include an undoped region next to the doping region 212 one or both sides of the doping region 212.

In the variation shown in FIG. 2, the second set of doping regions 212 is positioned such that when light is carried by the waveguide 204, the mode of the light will at least partially overlap with the second set of doping regions 212. Because this overlap results in optical loss for light traveling through the waveguide 204, it may be desirable for the second set of doping regions 212 to be relatively shallow. For example, the height (i.e., a thickness along a vertical direction of the photonic integrated circuit 200) of each of the second set of doping regions 212 may be thinner than the height of each of the first set of doping regions 210a-210b. In this way, there may be fewer defects created in the second set of doping regions 212 as compared to instances in which the same type of dopant is used to create a doping region in the slab waveguide 208 (such as included in the PIN phase shifter 102 of FIGS. 1A and 1B).

The first set of doping regions 210a, 210b is formed in the slab waveguide 208 one or both sides of the waveguide 204. For example, in the variation shown in FIG. 2, the first set of doping regions 210a, 210b includes a first doping region 210a positioned on a first side of the waveguide 204 (e.g., on a first side of the strip 206) and a second doping region 210b is positioned on a second side of the waveguide 104 opposite the first side (e.g., on a second side of the strip 206). Light traveling along a length of the waveguide 204 will travel between the first and second doping regions of the first set of doping regions 210a, 210b. While the first set of doping regions 210a, 210b is formed in the slab waveguide 208, each of the first and second doping regions 210a, 210b may be spaced far enough from the strip 206 such that, during operation, the mode of light carried in the waveguide 204 will not overlap with the first set of doping regions 210a, 210b. Accordingly, the first set of doping regions 210a, 210b are not considered to be part of the rib waveguide 204.

A portion of the waveguide 204 (including corresponding portions of the strip 206 and the slab waveguide 208) remains undoped, such that the first set of doping regions 210a, 210b, the second set of doping regions 212, and the undoped portion of the waveguide 204 collectively form a PIN diode 214. The PIN diode 214 may be electrical connected to a control circuit (not shown) that configured to drive current 224 through the PIN diode 214. Specifically, current 214 flows through the PIN diode 214 from the second set of doping regions 212 (when the second set of doping regions is p-doped) to the first set of doping regions 210a, 210b through the undoped portion of waveguide 204, which acts as the intrinsic region of the PIN diode 214. In this way, the undoped portion of the waveguide 204 separates the first set of doping regions 210a, 210b from the second set of doping regions 212. In these instances, the current 224 enters the waveguide 204 from a top surface of the strip 206 (i.e., via the second set of doping regions 212), travels through strip 206 and into the slab waveguide 208, where it is collected by the first set of doping regions 210a, 210b. In instances where the first set of doping regions includes first and second doping regions 210a, 210b positioned on opposite sides of the waveguide 204, each of the doping regions may provide a different current path along which current 224 may be collected from the waveguide 204.

This current 224 injects carriers into the waveguide 204 to change the refractive index of the portion of the waveguide 204 positioned between the first set of doping regions 210a, 210b and second doping region 212. This change in refractive index modulates the phase of light traveling through the waveguide 204. Accordingly, the PIN phase shifter 214 may controllably change the phase of light travelling through the waveguide 204 by controlling the amount of current 224 (e.g., via the control circuit) flowing through the PIN diode 214.

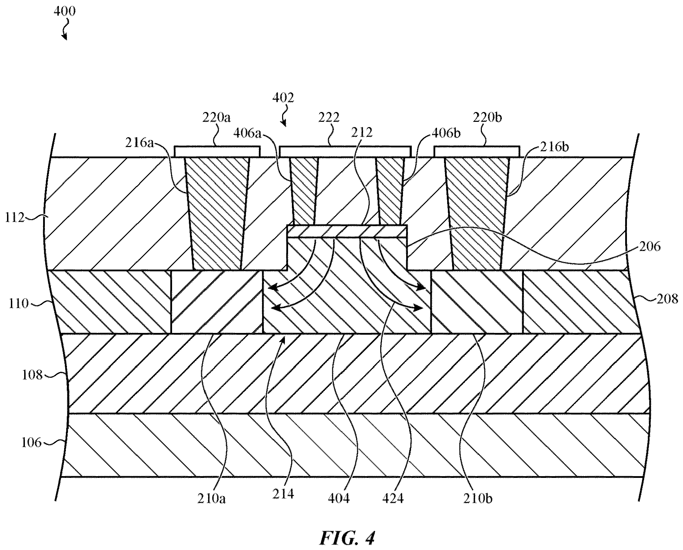

In order to provide a current path between the PIN diode 214 and the control circuit, the PIN phase shifter 214 includes a plurality of conductive traces that includes a first set of conductive traces 220a, 220b and a second set of conductive traces 222. It should be appreciated that these conductive traces are an example of a way in which current may be driven through the PIN diode 214, and any suitable electrical connections to the various doping regions of the PIN diode 214 may be used to operate the PIN diode. In the variation shown in FIG. 2, the first set of conductive traces 220a, 220b electrically connects the first set of doping regions 210a, 210b to the control circuit, while the second set of conductive traces 222 electrically connects the second set of doping regions 212 to the control circuit. In instances where the first set of doping regions 210a, 210b includes multiple doping regions, the first set of conductive traces 220a, 220b may also include multiple conductive traces (e.g., a first conductive trace 220a electrically connected to the first doping region 210a and a second conductive trace 220b electrically connected to the second doping region 220b). In some of these variations, the first and second conductive traces may be shorted together such that the first set of conductive traces 220a, 220b forms a single input to the control circuit. Alternatively, the first set of conductive traces may include a single conductive trace that is electrically connected to each doping region of the first set of doping regions 210a, 210b. While the second set of conductive traces 222 is shown in FIG. 2 as having a single conductive trace 222, it should also be appreciated that the second set of conductive traces 222 may include multiple conductive traces, such as described herein with respect to FIG. 4.

The first set of conductive traces 220a, 220b and the second set of conductive traces 222 may be electrically connected to the control circuit to electrically connect the control circuit to the PIN diode 214. Each of these conductive traces may be embedded in or positioned on (as shown in FIG. 2) the second cladding layer 112, or otherwise suspended above the PIN diode 214. Specifically, each doping region of the first set of doping regions 210a, 210b is electrically connected to the first set of conductive traces 220a, 220b via a corresponding set of conductive vias. For example, a first set of conductive vias 216a may electrically connect the first doping region 210a to the first conductive trace 220a, and a second set of conductive vias 216b may electrically connect the second doping region 210b to the second conductive trace 220b. In instances where the first set of conductive traces 220a, 220b includes a single conductive trace, the single conductive trace may be electrically connected to both the first doping region 210a (via the first set of first set of conductive vias 216a) and the second doping region 210b (via the second set of conductive vias 216b).

Similarly, each doping region of the second set of doping regions 212 is electrically connected to the second set of conductive traces 222 via a corresponding set of conductive vias. In the example shown in FIG. 2, a third set of conductive vias 218 may electrically connect the doping region 212 to the conductive trace 222. In instances where the second set of doping regions 212 includes multiple doping regions, each doping region may have a different set of conductive vias that connect that doping region to a corresponding conductive trace of the second set of conductive traces 222. The conductive vias may be formed in any manner as described with respect to FIGS. 1A and 1B, and each set of conductive vias (e.g., the first, second, and third sets of conductive vias 216a, 216b, 218) may have any suitable number of conductive vias.

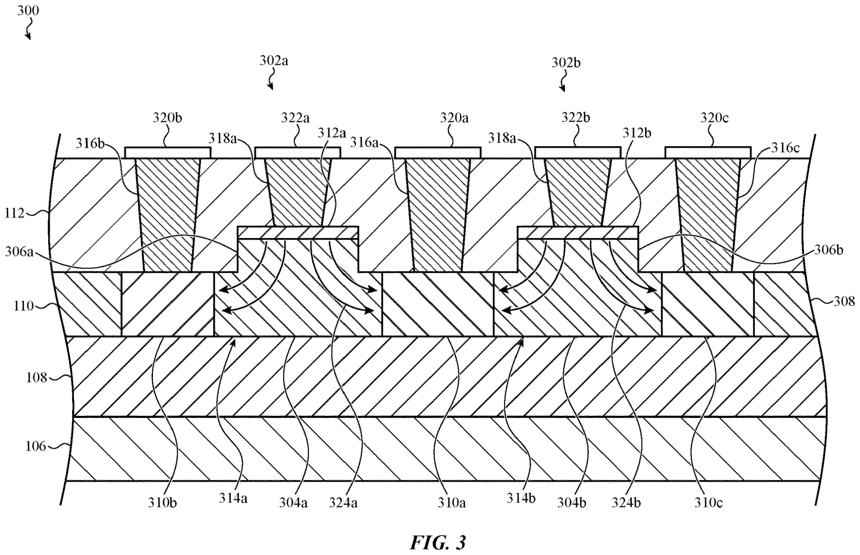

Because the first set of doping regions 220a, 220b of the PIN phase shifter 202 have the same conductivity type, it may be possible to place two of these PIN phase shifters next to each other without needing to create trenches through the waveguide layer 110 (such as the trenches 130 of FIGS. 1A and 1B) to electrically isolate the PIN phase shifters. Indeed, in some variations two adjacent PIN phase shifters may share a common doping region. For example, FIG. 3 shows a cross-sectional side view of one such variation of a photonic integrated circuit 300 that includes two PIN phase shifters, a first PIN phase shifter 302a and a second PIN phase shifter 302b, positioned in a side-by-side arrangement. The photonic integrated circuit 200 includes a substrate 106, a first cladding layer 108 supported by the substrate 106 (either directly or via one or more intervening layers), a waveguide layer 110 positioned on the first cladding layer 108, and optionally a second cladding layer 112 covering one or more additional surfaces of the waveguide layer 110, such as described above with respect to FIGS. 1A and 1B.

Each of the first and second PIN phase shifters 302a, 302b may be configured in any suitable manner as the PIN phase shifters described herein with respect to FIGS. 2 and 4-7. In the example shown in FIG. 3, each of the first and second PIN phase shifters 302a, 302b is configured the same as the PIN phase shifter 202 depicted in FIG. 2. In these instances, the waveguide layer 110 is shaped to define a first waveguide 304a and a second waveguide 304b, each of which are shown in FIG. 3 as being rib waveguides. Specifically, the waveguide layer 110 is shaped to include a first strip 306a and a second strip 306b, each of which extends from a slab waveguide 308. The first strip 306a and the slab waveguide 308 collectively form the first waveguide 304a, such that light travelling along a length of the first waveguide 304a will be confined to the first strip 306a as well as a portion of the slab waveguide 308 on either side of the first strip 306a. Similarly, the second strip 306b and the slab waveguide 308 collectively form the second waveguide 304b, such that light travelling along a length of the second waveguide 304b will be confined to the second strip 306b as well as a portion of the slab waveguide 308 on either side of the second strip 306b.

The slab waveguide 308 includes a plurality of doping regions 310a-310c having the same conductivity type. For example, each of the plurality of doping regions 310a-310c may be an N-type region, such as described herein. The plurality of doping regions 310a-310c includes a first doping region 310a positioned between the first waveguide 304a and the second waveguide 304b. In the variation shown in FIG. 3, the plurality of doping regions 310a-310c further includes a second doping region 310b, where the first waveguide 304a is positioned between the first and second doping regions 310a, 310b (such that light traveling along a length of the first waveguide 304a passes between the first and second doping regions 310a, 310b). Similarly, the plurality of doping regions 310a-310c further includes a third doping region 310c, where the second waveguide 304b is positioned between the first and third doping regions 310a, 310c (such that light traveling along a length of the second waveguide 304b passes between the first and third doping regions 310a, 310c).

Each of the first strip 306a and the second strip 306b include a correspond set of doping regions having a second conductivity type different than the first conductivity type. The first strip 306a includes a first set of doping regions 312a having the second conductivity type, and the second strip 306b includes a second set of doping regions 312b having the second conductivity type. For example, when each of the plurality of doping regions 310a-310c is an n-type region, each of the first and second sets of doping regions 312a, 312b may be a p-type region.

The first PIN phase shifter 302a may include a first PIN diode 314a formed by the first and second doping regions 310a, 310b, the first set of doping regions 312a, and an undoped portion of the first waveguide 304a positioned between the first set of doping regions 312a and each of the first and second doping regions 310a, 310b. Accordingly, a first current 324a may be driven through the first PIN diode 314a to change a phase of light traveling through the first waveguide 304a, such as described herein.

Similarly, the second PIN phase shifter 302b may include a second PIN diode 314b formed by the first and third doping regions 310a, 310c, the second set of doping regions 312b, and an undoped portion of the second waveguide 304b positioned between the second set of doping regions 312b and each of the first and third doping regions 310a, 310c. Accordingly, a second current 324b may be driven through the second PIN diode 314b to change a phase of light traveling through the second waveguide 304b, such as described herein.

The first and second PIN phase shifters 302a, 302b share the first doping region 310a while still allowing for separate control of the first and second PIN phase shifters 302a, 302b. Specifically, when the first current 324a is injected into the first PIN diode 314a via the first set of doping regions 312a, the first doping region 310a may collect at least a portion of this current. Similarly, when the second current 324b is injected into the second PIN diode 314b via the second set of doping regions 312b, the first doping region 310a may collect at least a portion of this current. By sharing a common doping region (i.e., the first doping region 310a), the first and second PIN phase shifters 302a, 302b may be positioned closer to each as compared to designs where multiple doping regions (and, in some instances, a trench) are positioned between the waveguides of adjacent PIN phase shifters.

The first and second PIN shifters 302a, 302b also share some of the electrical contacts used to connect the first and second PIN diodes 314a, 314b to a control circuit. For example, the plurality of doping regions 310a-310c may be electrically connected to a first set of conductive traces 316a-316c. While shown in FIG. 3 as including three different conductive traces (e.g., a first conductive trace 316a electrically connected to the first doping region 310a, a second conductive trace 316b electrically connected to the second doping region 310b, and a third conductive trace 316c electrically connected to the third doping region 310c), it should be appreciated that these traces may be replaced by a smaller number of traces or may be otherwise shorted together such that the first set of conductive traces 316a-316c form a single input (e.g., a first input) to the control circuit. Each of the plurality of doping regions 310a-310c is electrically connected to the first set of conductive traces via a corresponding set of conductive vias (e.g., a first set of conductive vias 316a, a second set of conductive vias 316b, and a third set of conductive vias 316c, respectively), such as described herein.

Each of the first set of doping regions 312a is electrically connected to a conductive trace (referred to herein as "fourth conductive trace 322a") via a corresponding set of conductive vias 318a. Each of the second set of doping regions 312b is electrically connected to a conductive trace (referred to herein as "fifth conductive trace 322b") via a corresponding set of conductive vias 318b. Accordingly, the fourth conductive trace 322a may provide a second input to the control circuit, while the fifth conductive trace 322b may provide a third input to the control circuit. These inputs may be separately controlled by the control circuit to provide individual control of the first and second PIN phase shifters 302a, 302b.

In some variations, the PIN phase shifters described here may include one or more features designed to reduce optical losses as light travels through a waveguide of the PIN phase shifter. For example, returning to FIG. 2, while contact between the third set of conductive vias 218 and the strip 206 allows for electrical connection between the PIN diode 204 and a control circuit, it also may cause optical losses as light travels through the waveguide 204 (even when the PIN phase shifter 202 is not actively driving current through the waveguide 204 to modify the light's phase). The amount of this loss depends on the amount of overlap between the conductive vias 218 and the mode of the light traveling through waveguide 204.

Accordingly, in some variations it may be desirable to position and configure the third set of conductive vias 218 to help minimize the overlap between the conductive vias 218 and the mode of light in the waveguide 204. For example, in some variations some or all of the conductive vias 218 may be positioned off-center with respect to the strip 206. This may be especially useful in instances where light traveling through the waveguide 204 has a symmetric mode profile, in which case an off-centered conductive via may have less overlap with the light's mode as compared to a centered conductive via.

FIG. 4 shows one such example of a photonic integrated circuit 400 that includes a PIN phase shifter 402. The PIN phase shifter 402 may be configured to have the same components as the PIN phase shifter 202 of FIG. 2 (with like components labeled the same as in FIG. 2), except that the third set of conductive vias 218 of the PIN phase shifter 202 has been replaced by a set of off-center conductive vias 406a, 406b, each of which is positioned off-center relative to a center of the width of the strip 206. In the variation shown in FIG. 4, the set of off-centered conductive vias includes one or more pairs of off-center conductive vias that are positioned side by side. For example, a first off-center conductive via 406a and a second off-center conductive via 406b are positioned side-by-side along a width of the strip 206, such that the first conductive via 406a is positioned on a first side of the center of the strip 206 and the second conductive via is positioned on a second side of the center of the strip 206. In some instances it may be desirable to place the first and second conductive vias 406a, 406b close to or at the edges of the top surface of the strip 206. This may reduce the overlap between the mode of the light in the strip and the first and second conductive vias 406a, 406b.

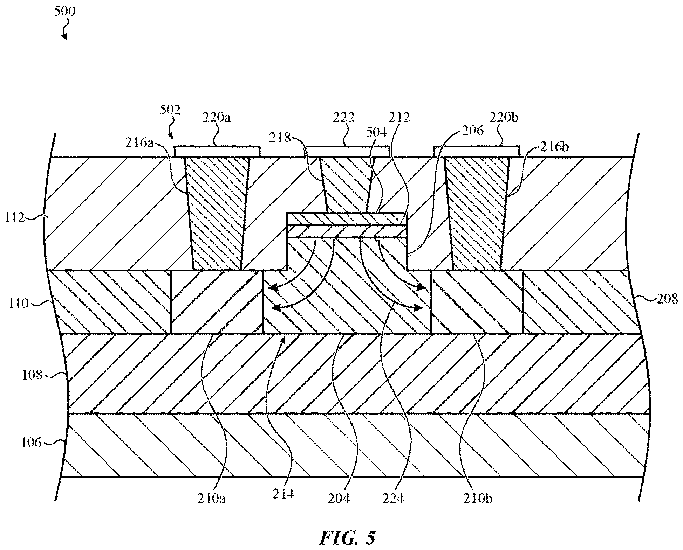

Additionally or alternatively, an additional conductive layer may be positioned between the second set of doping regions 212 and the conductive vias. For example, FIG. 5 shows one such example of a photonic integrated circuit 500 that includes a PIN phase shifter 502. The PIN phase shifter 502 may be configured to have the same components as the PIN phase shifter 202 of FIG. 2 (with like components labeled the same as in FIG. 2), except that a barrier layer 504 is positioned between the third set of conductive vias 218 and the strip 206. The barrier layer 504 may be formed from an electrically conductive material, which allows the barrier layer 504 to electrically connect the third set of conductive vias 218 to the second set of doping regions 212. The barrier layer 504 may help to confine the mode of light carried by the waveguide 204, which may reduce losses that would otherwise occur if the third set of conductive traces 218 were to directly contact the strip 206.

The barrier layer 504 allows for certain materials to form the third set of conductive vias 218 without the optical loss that would otherwise be caused by those materials. For example, materials such as tungsten or tungsten-titanium alloys may be particularly suited for forming conductive vias, such as vias having high aspect ratios, but may be less well suited for minimizing optical loss in the waveguide 204. Conversely, materials such as aluminum, copper, or aluminum-copper alloys may be better suited for reducing optical losses in the waveguide 204, but are less well suited for forming the conductive vias. Accordingly, the barrier layer 504 may be formed from a first conductive material such as aluminum, copper, an aluminum copper alloy, or the like, and the third set of conductive vias 216 may be formed from a second conductive material such as tungsten, a tungsten-titanium alloy, or the like. The barrier layer 504 may have a smaller height than each of the third set of conductive vias 216. Additionally or alternatively, the barrier layer 504 may be wider than each of the third set of conductive vias 216. For example, the barrier layer 504 may have the same width as the strip 206, whereas each of the third set of conductive vias 216 may have a corresponding width less than the width of the strip 206. Additionally or alternatively, the barrier layer 504 may have a lower aspect ratio (i.e., the ratio of its height to its width) than the aspect ratio of each of the third set of conductive vias 216).

As mentioned herein, the second set of doping regions of a PIN phase shifter may include multiple doping regions. For example, FIGS. 6A and 6B show cross-sectional side and top views (with the second cladding layer 112 and conductive traces 220a, 220b, and 222 not shown in FIG. 6B), respectively of a photonic integrated circuit 600 that includes a PIN phase shifter 602. The PIN phase shifter 602 may be configured to have the same components as the PIN phase shifter 402 of FIG. 4 (with like components labeled the same as in FIG. 4), except that the PIN phase shifter 602 includes a second set of doping regions that includes a first doping region 612a and a second doping region 612b of the same conductivity type. The first and second doping regions 612a, 612b are positioned side-by-side in the strip 206 (e.g., along a width of the strip 206), such that an undoped portion of the strip 206 is positioned between the first and second doping regions 612a, 612b. Positioning the doping regions 612a, 612b away from the center of the strip 206 may reduce the overlap between the first set of doping regions 612a, 612b and the mode of light traveling along the length of the waveguide 204 (as represented by arrow 620). It should be appreciated that a first set of conductive vias (e.g., first off-center conductive via 406a) may electrically connect the first doping region 612a to the second set of conductive traces 222, while a second set of conductive vias (e.g., second off-center conductive via 406b) may electrically connect the second doping region 612b to the second set of conductive traces 222.

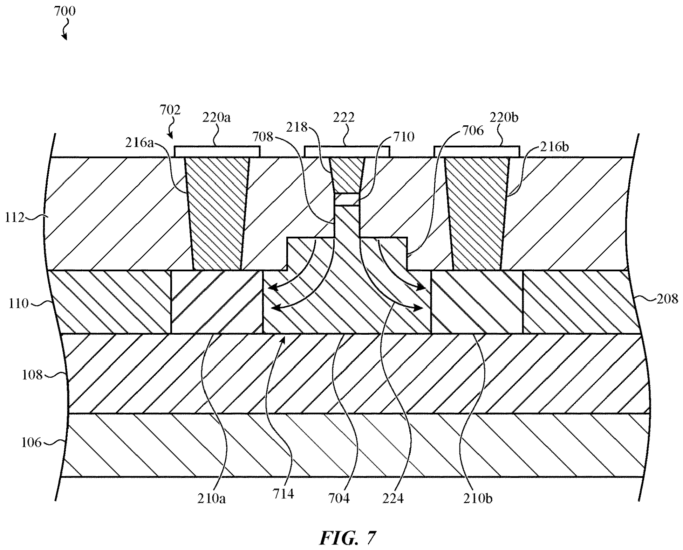

In still other variations, the waveguide of a PIN phase shifter may be configured to position the second set of doping regions away from the mode of light carried by the waveguide. For example, FIG. 7 shows one such example of a photonic integrated circuit 700 that includes a PIN phase shifter 702. The PIN phase shifter 702 may be configured to have the same components as the PIN phase shifter 202 of FIG. 2 (with like components labeled the same as in FIG. 2), except that the waveguide 202 of FIG. 2 is replaced with a waveguide 704 having a first strip 706 extending from the rib waveguide 208, and a second strip 708 extending from a top surface of the first strip 706. A width of the second strip 708 is narrower than a width of the first strip 706 and may be sized such that light carried by the waveguide 704 is predominantly confined within the first strip 706 and the portions of the slab waveguide 208 on either side of the first strip 706. A top surface of the second strip 708 may be doped to form a second set of doping regions 710 (which may be configured in any manner as described herein with respect to the second sets of doping regions of FIGS. 2-6). The first strip 706 and a portion of the second strip 708 may be undoped, such that the first set of doping regions 210a, 210b, the second set of doping regions 710, and the undoped portions of the waveguide 704 form a PIN diode 714. The second set of doping regions 710 may be electrically connected to the second set of conductive traces 222 via the third set of conductive vias 218, such as described herein. Accordingly, the PIN diode 714 may be controlled to drive current 224 through the waveguide 704 and adjust the phase of light travelling through the waveguide 704. In this instance, because the second set of doping regions 710 is positioned further away from the mode of this light, the second set of doping regions 710 may cause less optical loss.

Exemplary embodiments of the present disclosure are set out in the following items and articles:
1. A photonic integrated circuit comprising:
   a substrate;
   a first cladding layer supported by the substrate;
   a waveguide layer positioned on the first cladding layer; and
   a PIN phase shifter, wherein:
      the waveguide layer shaped to define a rib waveguide, the rib waveguide comprising a strip extending from a slab waveguide;
      the slab waveguide comprises a first set of doping regions positioned on one or both sides of the strip;
      the strip comprises a second set of doping regions, such that the first set of doping regions has a different conductivity type than the second set of doping regions; and
      the PIN phase shifter comprises a PIN diode formed by the first set of doping regions, the second set of doping regions, and an undoped portion of the rib waveguide.
2. The photonic integrated circuit of item 1, wherein:
   the second set of doping regions extend at least partially through the strip from a top surface of the strip.
3. The photonic integrated circuit of any of items 1-2, wherein:
   the second set of doping regions comprises a doping region that extends across an entire width of the strip.
4. The photonic integrated circuit of any of items 1-3, wherein:
   the first set of doping regions comprises a first doping region positioned on a first side of the rib waveguide and a second doping region positioned on a second side of the rib waveguide.
5. The photonic integrated circuit of any of items 1-4, wherein:
   each of the first set of doping regions forms an n-type region; and
   each of the second set of doping regions forms a p-type region.
6. The photonic integrated circuit of any of items 1-5, comprising:
   a first set of conductive traces electrically connecting the first set of doping regions to a control circuit; and
   a second set of conductive traces electrically connecting the second set of doping regions to the control circuit.
7. The photonic integrated circuit of item 6, comprising:
   a set of conductive vias electrically connecting the second set of doping regions to the second set of conductive traces.
8. The photonic integrated circuit of item 7, wherein:
   some or all of the set of conductive vias are positioned off-center with respect to the strip.
9. The photonic integrated circuit of item 8, wherein:
   the set of conductive vias comprises a first conductive via and a second conductive via;
   the first conductive and the second conductive via are positioned side-by-side along a width of the strip.
10. The photonic integrated circuit of any of items 7-9, comprising:
   a barrier layer electrically connecting the set of conductive vias and the second set of doping regions, wherein the barrier layer and conductive vias are formed from different materials.
11. The photonic integrated circuit of item 10, wherein:
   the barrier layer has a smaller height than each of the set of conductive vias.
12. The photonic integrated circuit of any of items 10-11, wherein:
   the barrier layer is wider than each of the set of conductive vias.
13. The photonic integrated circuit of any of items 1-12, wherein:
   the second set of doping regions comprises a plurality of doping regions.
14. The photonic integrated circuit of item 13, wherein the second set of doping regions comprises a first doping region and a second doping region positioned side-by-side along a width of the strip.
15. The photonic integrated circuit of any of items 1-14, wherein the strip comprises a first strip extending from the slab waveguide and a second strip extending from a top surface of the first strip.
16. A photonic integrated circuit comprising:
   a substrate;
   a first cladding layer supported by the substrate;
   a waveguide layer positioned on the first cladding layer; and
   a PIN phase shifter, wherein:
      the waveguide layer shaped to define a rib waveguide, the rib waveguide comprising a first strip extending from a slab waveguide and a second strip extending from a top surface of the first strip;
      the slab waveguide comprises a first set of doping regions positioned on one or both sides of the first strip;
      the second strip comprises a second set of doping regions, such that the first set of doping regions has a different conductivity type than the second set of doping regions; and
      the PIN phase shifter comprises a PIN diode formed by the first set of doping regions, the second set of doping regions, and an undoped portion of the rib waveguide.
17. A photonic integrated circuit comprising:
   a first waveguide comprising a first strip that extends from a slab waveguide;
   a second waveguide comprising a second strip that extends from the slab waveguide;
   a plurality of doping regions positioned in the slab waveguide having a first conductivity type, wherein a first doping region of the plurality of doping regions is positioned the first strip and the second strip;
   a first set of doping regions positioned in the first strip and having a second conductivity type;
   a second set of doping regions positioned in the second strip and having the second conductivity type;
   a first PIN phase shifter comprising a first PIN diode formed from an undoped portion of the first waveguide, the first set of doping regions, and the first doping region of the plurality of doping regions; and
   a second PIN phase shifter comprising a second PIN diode formed from an undoped portion of the second waveguide, the second set of doping regions, and the first doping region of the plurality of doping regions.
18. The photonic integrated circuit of item 17, wherein:
   the plurality of doping regions comprises a second doping region, wherein the first waveguide is positioned between the first doping region and the second doping region of the plurality of doping regions.
19. The photonic integrated circuit of item 18, wherein:
   the plurality of doping regions comprises a third doping region, wherein the second waveguide is positioned between the first doping region and the third doping region of the plurality of doping regions.
20. The photonic integrated circuit of any of items 17-19, comprising:
   a set of conductive traces electrically connected to the plurality of doping regions, wherein:
   each of the plurality of doping regions is electrically connected to the set of conductive traces via a corresponding set of conductive vias.

## Claims

1. A photonic integrated circuit comprising:
a substrate;
a first cladding layer supported by the substrate;
a waveguide layer positioned on the first cladding layer; and
a PIN phase shifter, wherein:
the waveguide layer shaped to define a rib waveguide, the rib waveguide comprising a strip extending from a slab waveguide;
the slab waveguide comprises a first set of doping regions positioned on one or both sides of the strip;
the strip comprises a second set of doping regions, such that the first set of doping regions has a different conductivity type than the second set of doping regions; and
the PIN phase shifter comprises a PIN diode formed by the first set of doping regions, the second set of doping regions, and an undoped portion of the rib waveguide.

2. The photonic integrated circuit of claim 1, wherein:
the second set of doping regions extend at least partially through the strip from a top surface of the strip.

3. The photonic integrated circuit of any of claims 1-2, wherein:
the second set of doping regions comprises a doping region that extends across an entire width of the strip.

4. The photonic integrated circuit of any of claims 1-3, wherein:
the first set of doping regions comprises a first doping region positioned on a first side of the rib waveguide and a second doping region positioned on a second side of the rib waveguide.

5. The photonic integrated circuit of any of claims 1-4, wherein:
each of the first set of doping regions forms an n-type region; and
each of the second set of doping regions forms a p-type region.

6. The photonic integrated circuit of any of claims 1-5, comprising:
a first set of conductive traces electrically connecting the first set of doping regions to a control circuit; and
a second set of conductive traces electrically connecting the second set of doping regions to the control circuit.

7. The photonic integrated circuit of claim 6, comprising:
a set of conductive vias electrically connecting the second set of doping regions to the second set of conductive traces.

8. The photonic integrated circuit of claim 7, wherein:
some or all of the set of conductive vias are positioned off-center with respect to the strip.

9. The photonic integrated circuit of claim 8, wherein:
the set of conductive vias comprises a first conductive via and a second conductive via;
the first conductive and the second conductive via are positioned side-by-side along a width of the strip.

10. The photonic integrated circuit of any of claims 7-9, comprising:
a barrier layer electrically connecting the set of conductive vias and the second set of doping regions, wherein the barrier layer and conductive vias are formed from different materials.

11. The photonic integrated circuit of claim 10, wherein:
the barrier layer has a smaller height than each of the set of conductive vias.

12. The photonic integrated circuit of any of claims 10-11, wherein:
the barrier layer is wider than each of the set of conductive vias.

13. The photonic integrated circuit of any of claims 1-12, wherein:
the second set of doping regions comprises a plurality of doping regions.

14. The photonic integrated circuit of claim 13, wherein the second set of doping regions comprises a first doping region and a second doping region positioned side-by-side along a width of the strip.

15. The photonic integrated circuit of any of claims 1-14, wherein the strip comprises a first strip extending from the slab waveguide and a second strip extending from a top surface of the first strip.
